**Europäisches Patentamt**

**European Patent Office**

**Office européen des brevets**

(11) Veröffentlichungsnummer: **0 135 012**
**A1**

## (12) EUROPÄISCHE PATENTANMELDUNG

(21) Anmeldenummer: **84108281.1**

(22) Anmeldetag: **13.07.84**

(51) Int. Cl.⁴: **B 01 D 39/00**
**B 01 D 46/42, F 24 C 15/20**
**G 01 N 31/22**

(30) Priorität: **16.07.83 DE 3325753**

(43) Veröffentlichungstag der Anmeldung:
**27.03.85 Patentblatt 85/13**

(84) Benannte Vertragsstaaten:
**AT BE CH FR GB IT LI NL**

(71) Anmelder: **Christian Heinrich Sandler GmbH & Co. KG**
**Lamitzmühle**
**D-8676 Schwarzenbach/Saale(DE)**

(72) Erfinder:
**Die Erfinder haben auf ihre Nennung verzichtet**

(74) Vertreter: **LOUIS, PÖHLAU, LOHRENTZ & SEGETH**
**Kesslerplatz 1 P.B. 3055**
**D-8500 Nürnberg(DE)**

(54) **Filtermatte mit Fettindikator.**

(57) Es wird eine Filtermatte zur Aufnahme von fettoder ölhaltigen Dämpfen o.dgl. vorgeschlagen, welche einen eine Farbänderung hervorrufenden Indikator umfasst. Der Indikator besteht aus einem Gemisch aus einem Farbstoff und Kieselsäure mit hoher, spezifischer Oberfläche, die gründlich vermischt sind. Ein derartiges Gemisch kann ganz allgemein als Farbindikator zum Anzeigen des Erreichens einer bestimmten Fett- und/oder Ölkonzentration verwendet werden.

EP 0 135 012 A1

## Filtermatte mit Fettindikator

Die Erfindung betrifft Filtermatten aus künstlichen oder natürlichen Fasern, auf welche zumindest an einer Oberfläche ein mindestens einen Farbstoff enthaltendes Gemisch aus wenigstens zwei unterschiedliche Farben aufweisenden Bestandteilen ganz oder bereichsweise aufgebracht ist, wobei bei Einwirkung von Fett oder Öl in hinreichender Konzentration eine deutliche Farbänderung des Gemisches erfolgt.

Filtermatten, insbesondere in Küchendunstabzugshauben, reichern sich mit zunehmender Benutzungsdauer mit Fett- und Kochdunstpartikeln an, was dazu führt, dass der Druckverlust in der Filtermatte beim Absaugen höher wird und damit die Wirksamkeit der Filtermatte abnimmt. Es ist daher erforderlich, Filtermatten, insbesondere bei Absaugung von fetthaltiger Luft, regelmässig zu erneuern. Diese Erneuerung erfolgte bisher meist zu spät, und zwar deswegen, weil die Verstopfung der Filtermatten durch abgeschiedenes Fett oder Öl häufig äusserlich nicht zu erkennen ist. Dies hat nicht nur den Nachteil einer Verminderung der Wirksamkeit der Filtermatte. Eine ganz erhebliche Gefahr besteht vor allem darin, dass sich in der Filtermatte hohe Fettmengen ansammeln können, die in einem Brandfall den Verlauf ungünstig beeinflussen können. Zudem kann unter Umständen auch ein zu starker Fettgehalt dazu führen, dass die Dunstabzugshauben o.dgl., in denen die Filtermatten angeordnet sind, zumindest oberflächlich beschädigt werden.

Es sind nun schon verschiedene Filtermatten bekannt, die mit Indikatoren versehen sind, welche bei Erreichen einer gewissen Fettkonzentration in der Filtermatte zu einer Farbveränderung führen, sei es, dass eine ursprünglich farblose Filtermatte plötzlich deutlich gefärbt wird, sei es, dass ein Farbumschlag eintritt.

Bei sämtlichen bekannten Indikatorsystemen, beispielsweise auch bei der eingangs erwähnten Filtermatte, wie sie Gegenstand des DE-GM 78 09 170 ist, werden nun fett- oder öllösliche Farben verwendet, um diesen Farbumschlag zu erreichen. Dieses Vorgehen hat jedoch etliche Mängel. Zum einen ist bei der Verwendung fettlöslicher Farben im allgemeinen nicht mit einer sehr genauen Anzeige des Sättigungsgrades der Filtermatte zu rechnen. Es kann vielmehr unter Umständen schon sehr frühzeitig zu einem Farbumschlag kommen, wenn nämlich die fettlöslichen Farbstoffe auf der der Kochstelle o.dgl. zugekehrten Seite der Filtermatte angeordnet sind. Dies führt dazu, dass die Filtermatte zu bald ausgewechselt wird, was unnötige Kosten verursacht.

Es ist auch bereits bekannt, die fettlöslichen Farbstoffe auf der der Kochstelle o.dgl. abgekehrten Seite der Filtermatte anzubringen (DE-PS 27 08 435), wobei dann eine Veränderung erst sichtbar wird, wenn die fettlöslichen Farbstoffe durch die Filtermatte hindurch zu deren bei Gebrauch sichtbarer Vorderseite diffundiert sind. Dieses Vorgehen hat den Nachteil, dass der Dicke der Filtermatte verhältnismässig enge Grenzen gesetzt sind, somit unter Umständen nur eine recht beschränkte Filterwirkung erreicht werden kann. Das z. B. der DE-PS 27 08 435 zugrundeliegende Migrationsprinzip kann zusätzlich auch bei voluminösen Filtern mit grossen Faserzwischenräumen nicht verwendet werden, da bei derartigen Materialien der Farbstoff wegen der grossen Zwischenräume keine Möglichkeit hat, zu wandern.

Die besten Ergebnisse dürften sich mit der Filtermatte gemäss dem DE-GM 78 09 170 erreichen lassen, wo wenigstens ein Teil der Faser mit einem Gemisch aus mindestens zwei ineinander unlöslichen Komponenten beschichtet ist, wobei die eine fett- und/oder öllöslich ist und eine Farbe aufweist, die sich deutlich von der Farbe des Fasergemisches und/oder der anderen Komponente unterscheidet, und wobei die andere Komponente nicht fett- und/oder öllöslich ist. Man geht dabei davon aus, dass durch die fett- bzw. öllösliche Komponente ein Farbumschlag eintritt, wenn eine hinreichende Sättigung der Filtermatte erreicht ist. Abhängig von der Wahl der Farbkombinationen kann hierbei erreicht werden, dass der Farbumschlag erst sichtbar wird, wenn tatsächlich eine ausreichende Sättigung eingetreten ist, d.h. eine hinreichende Menge des fett- bzw. öllöslichen Farbstoffes tatsächlich gelöst ist. Nachteilig ist bei einem derartigen Vorgehen jedoch, dass nur eine beschränkte Zahl von Kombinationen verwendet werden kann, weil ja jeweils ein deutlicher Farbumschlag erreicht werden muss.

Der Erfindung liegt nun die Aufgabe zugrunde, eine Filtermatte der eingangs erwähnten Art vorzuschlagen, bei welcher die vorstehend erläuterten Mängel nicht mehr auftreten, d.h. insbesondere nicht die Notwendigkeit besteht, einen fett- oder öllöslichen Farbstoff einzusetzen und bei der zudem, falls tatsächlich ein solcher Farbstoff verwendet sein sollte, trotzdem keinerlei Beschmutzungsgefahr gegeben ist. Trotzdem soll die Filtermatte nach der Erfindung einwandfrei eine Sättigung der Filtermatte mit Fett bzw. Öl anzeigen.

Zur Lösung dieser Aufgabe wird nach der Erfindung vorgeschlagen, dass bei der gattungsmässigen Filtermatte das Gemisch neben zumindest einem Farbstoff auch eine Kieselsäure mit hoher spezifischer Oberfläche enthält und die Bestandteile des Gemisches gründlich miteinander vermischt sind.

Gemäss der Erfindung wird somit als Indikatormedium ein Gemisch (sog. Compound) aus Kieselsäure mit hoher spezifischer Oberfläche und einem Farbstoff verwendet. Bei entsprechender Vermischung erreicht man dabei, dass die Kieselsäure den Farbstoff weitgehend oberflächlich abdeckt, d.h. gleichsam maskiert. Trocknet das Gemisch aus Farbstoff und Kieselsäure dann auf der Filtermatten-Oberfläche, so nimmt es nahezu vollständig die Farbe der Kieselsäure an, d.h. mattweiss. Es ist lediglich ein ganz geringer Farbschimmer von geringfügigen Mengen des Farbstoffes vorhanden, die stets an der äusseren Oberfläche verbleiben werden, d.h. nicht vollständig von der Kieselsäure abgedeckt sind. Kommt nun das Farbstoff/Kieselsäure-Gemisch mit Fett oder Öl in Berührung, so ändert sich das optische Verhalten der Kieselsäure derart, dass diese nicht mehr matt ist, sondern durchscheinend wird. In diesem Moment bestimmt die Farbe des Gemisches dann der Farbstoff, was zu einem deutlichen Farbumschlag führt. Während das ursprüngliche Gemisch stets eine Pastellfarbe besitzt, beispielsweise rosa, hellblau, hellgrün usw., erhält man nach einer Aufbringung von Öl bzw. Fett eine kräftige Farbe, beispielsweise rot, blau oder grün. In Versuchen hat sich dabei ergeben, dass bei Ausrüstung einer Filtermatte mit dem erfindungsgemässen Gemisch ein einwandfreier Farbumschlag erreicht wird, jedoch erst zu einem Zeitpunkt, wenn tatsächlich eine Auswechslung der Filtermatte erforderlich ist, d.h. eine hinreichende Menge von Fett bzw. Öl in der Matte enthalten ist. Trotz dieses Umstandes muss jedoch befürchtet werden, dass der Indikatorfarbstoff zu einer Verschmutzung des Geräts bzw. des Benutzers beim Auswechseln der Filtermatte führt, weil ja der Farbstoff durch die nicht lösliche Kieselsäure weitgehend maskiert ist. Die eventuell an der Oberfläche vorhandenen, geringfügigen Mengen von Farbstoff lassen sich leicht entfernen. Bei einem Vorgehen nach der Erfindung ist insbesondere auch nicht erforderlich, fett- oder öllösliche Farbstoffe zu verwenden. Es könnten vielmehr auch wasserlösliche Farbstoffe oder nicht lösliche Pigmente jeder Art eingesetzt werden. Nachdem keine Wanderung des Farbstoffes durch die Filtermatte erfolgt, kann das Verfahren gemäss der Erfindung auch bei voluminösen Filtermatten mit grossen Faserabständen Anwendung finden.

Besonders günstige Verhältnisse und eine leichte Verarbeitbarkeit erreicht man dann, wenn Kieselsäure verwendet wird, die hochdispers und pyrogen sowie leicht im Wasser dispergierbar ist.

Wie erwähnt, umfasst das Gemisch (Compound) auf jeden Fall Farbstoff und Kieselsäure. Zur Verbesserung der Eigenschaften des Gemisches hinsichtlich seines Auftrags auf die Filtermatte sowie seiner Haftung auf der Filtermatte ist es allerdings zweckmässig, wenn das Gemisch neben dem Farbstoff bzw. den Farbstoffen und der Kieselsäure ein polymeres Bindemittel mit verschiedenen Eigenschaften und/oder eine wasserhaltige, weiche Kunststoffdispersion (Vorkondensat) enthält. Als polymeres Bindemittel kann z.B. ein wasserlösliches Acrylharz verwendet werden, wie es von der Fa. Chemische Fabrik Stockhausen unter dem Handelsnamen "Mirox" VRN in den Verkehr gebracht wird. Dieses Produkt verdickt, wenn der ph-Wert grösser wird. Der Zusatz eines solchen Bindemittels erleichtert die Verarbeitung des Gemisches während des Aufbringens auf die Filtermatte. Die weiche, wasserhaltige Kunststoffdispersion wird deswegen zugesetzt, um die Haftung des Gemisches auf der Filtermatte während der Benutzung zu verbessern und insbesondere zu verhindern, dass das Gemisch während der Handhabung der Filtermatte abbröselt. Als solche Kunststoffdispersion kann eine Polyacrylharz-Dispersion in Wasser eingesetzt werden, beispielsweise ein Erzeugnis, wie es die Fa. Rohm & Haas unter der Bezeichnung "Primal HA 8" vertreibt.

Wenn das Gemisch nur Farbstoff, Kieselsäure, das polymere Bindemittel mit verdickenden Eigenschaften und die weiche Kunststoffdispersion enthält, ist es relativ zähflüssig. Aus diesem Grunde ist nach der Erfindung vor-

- 8 -

gesehen, dass das Gemisch vor dem Aufbringen auf die Filtermatte mit Wasser verdünnt ist, um so eine für die Verarbeitung, d.h. Aufbringung günstige Viskosität zu erhalten.

Es liegt schliesslich im Rahmen der Erfindung, dass das auf die Filtermatte aufzubringende oder allgemein als Farbindikator zur erfindungsgemässen Anzeige des Erreichens einer bestimmten Fett- und/oder Ölkonzentration dienende Gemisch aus folgenden Bestandteilen besteht:

a) 100 bis 400 Gewichtsteile hochdisperser, pyrogener leicht in Wasser dispergierbarer Kieselsäure mit hoher spezifischer Oberfläche,

b) 200 bis 600 Gewichtsteile Wasser,

c) 50 bis 300 Gewichtsteile eines polymeren Bindemittels mit verdickender Wirkung,

d) 50 bis 300 Gewichtsteile einer wasserhaltigen, weichen Kunststoffdispersion und

e) 0,1 bis 30 Gewichtsteile Farbstoff.

Weitere Merkmale, Einzelheiten und Vorteile der Erfindung ergeben sich aus der folgenden Beschreibung eines bevorzugten Beispiels einer Filtermatte gemäss der Erfindung bzw. der Rezeptur für das auf die Filtermatte aufzubringende Gemisch.

Es wird ein Gemisch aus folgenden Bestandteilen hergestellt:

200 Gewichtsteile hochdisperse, pyrogene Kieselsäure,
440 Gewichtsteile Wasser,
200 Gewichtsteile des unter der Bezeichnung "Mirox"
VRN vertriebenen wasserlöslichen Acrylharzes als
polymeres Bindemittel,
160 Gewichtsteile "Primal HA 8" als wasserhaltige
Polyacrylharz-Dispersion und
1 Gewichtsteil organischer, wasserlöslicher Farbstoff, nämlich "Supracenrot B".

Diese Bestandteile werden sorgfältig vermischt und
zu einem "Compound" mit streichfähiger Konsistenz
aufbereitet.

Dieser "Compound" wird dann von Hand oder zweckmässig
in einer geeigneten Maschine auf eine Oberfläche eines
Faservlieses, das als Filtermatte Verwendung finden
soll, aufgebracht. Man lässt das Gemisch dann an der
Oberfläche der Filtermatte antrocknen und schneidet
hieran anschliessend die Filtermatte zu passenden
Stücken.

Die Ausrüstung des als Filtermatte dienenden Vlieses
kann auf allen Textilmaschinen erfolgen, welche für
den einseitigen Auftrag von Ausrüstungsmitteln geeignet sind, so z.B. auf Beschichtungsanlagen, Pflatschen,
speziellen Foulards, Druckvorrichtungen und Sprühanlagen. Dabei muss die Viskosität des Gemisches an den
jeweiligen Maschinentyp angepasst werden, was im allgemeinen ohne grosse Schwierigkeiten durch Zusatz von
Wasser bzw. Lösungsmitteln erfolgen kann. Beim Pflatschen und Beschichten mittels Rakel ist z. B. die Viskosität höher zu halten. Beim Sprühen muss mit niedrigerer Viskosität gearbeitet werden. Das Gemisch kann einerseits Pastenform haben. Es ist aber auch eine Verarbeitung zu Schaum, z.B. bei Foulardausrüstung möglich.

Wie weiter erwähnt, können die unterschiedlichsten Farbstoffe verwendet werden. Beispielsweise sind organische und anorganische Pigmente, in Wasser lösliche oder dispergierbare sowie ggf. in Fett bzw. Öl lösliche Farbstoffe verwendbar.

Selbstverständlich ist es für besondere Anwendungsgebiete auch möglich, das Indikator-Gemisch nicht nur auf eine Oberfläche des Vlieses aufzubringen, sondern beispielsweise auf beide Oberflächen oder aber auch das Vlies vollständig zu imprägnieren. Üblicherweise wird man sich allerdings auf eine Aufbringung auf eine Oberfläche beschränken, da ja die Kosten möglichst niedrig gehalten werden sollen. Ausserdem könnte das Indikator-Gemisch selbstverständlich nicht nur auf Vliesen oder sonstigen Fasermatten eingesetzt werden. Auch eine Verwendung auf offenporigem Schaumstoff oder sonstigen Trägern ist möglich.

Grundsätzlich ist das Gemisch gemäss der Erfindung nicht nur als Fett-Indikator für Filtermatten o.dgl. verwendbar. Das Gemisch kann vielmehr überall dort eingesetzt werden, wo es darum geht, das Erreichen einer bestimmten Fett- bzw. Ölkonzentration anzuzeigen. Aus diesem Grunde wird erfindungsgemäss nicht nur Schutz für die Filtermatte selbst, sondern ganz allgemein für das Fett-Indikator-Gemisch aus Farbstoff und Kieselsäure beansprucht.

- 1 -

Patentansprüche
-----------------

1. Filtermatte aus künstlichen oder natürlichen
   Fasern, auf welche zumindest an einer Oberfläche ein mindestens einen Farbstoff enthaltendes Gemisch aus wenigstens zwei unterschiedliche Farben aufweisenden Bestandteilen
   ganz oder bereichsweise aufgebracht ist, wobei bei Einwirkung von Fett oder Öl in hinreichender Konzentration eine deutliche Farbänderung des Gemisches erfolgt, dadurch gekennzeichnet,
   dass das Gemisch neben zumindest einem Farbstoff auch eine Kieselsäure mit hoher spezifischer Oberfläche enthält und die Bestandteile des Gemisches gründlich ineinander vermischt sind.

2. Filtermatte nach Anspruch 1, dadurch gekennzeichnet,
   dass die Kieselsäure hochdispers und pyrogen sowie leicht in Wasser dispergierbar ist.

3. Filtermatte nach Anspruch 1 oder 2, dadurch gekennzeichnet, dass als Farbstoff organische und/oder anorganische Pigmente verwendet werden.

4. Filtermatte nach Anspruch 1 oder 2, dadurch gekennzeichnet, dass in dem Gemisch ein in Wasser dispergierbarer Farbstoff enthalten ist.

5. Filtermatte nach einem der vorhergehenden Ansprüche, dadurch gekennzeichnet, dass das Gemisch neben dem Farbstoff bzw. Farbstoffen und der Kieselsäure ein polymeres Bindemittel mit verdickenden Eigenschaften und /oder eine wasserhaltige, weiche Kunststoffdispersion enthält.

6. Filtermatte nach Anspruch 5, dadurch gekennzeichnet, dass das Gemisch vor dem Aufbringen auf die Filtermatte mit Wasser verdünnt ist.

7. Filtermatte nach einem der vorhergehenden Ansprüche, dadurch gekennzeichnet, dass das auf die Filtermatte aufzubringende Gemisch besteht aus
   a) 100 bis 400 Gewichtsteilen hochdisperser, pyrogener, leicht in Wasser dispergierbarer Kieselsäure mit hoher spezifischer Oberfläche,

- 3 -

b) 200 bis 6oo Gewichtsteilen Wasser,

c) 50 bis 300 Gewichtsteilen eines polymeren Bindemittels mit verdickender Wirkung,

d) 50 bis 300 Gewichtsteilen einer wasserhaltigen, weichen Kunststoffdispersion und

e) 0,1 bis 30 Gewichtsteilen Farbstoff.

8. Verwendung des Gemisches nach einem der vorhergehenden Ansprüche als Farbindikator zur Anzeige des Erreichens einer bestimmten Fett- und/oder Ölkonzentration.

0135012

**Europäisches Patentamt**

# EUROPÄISCHER RECHERCHENBERICHT

Nummer der Anmeldung

EP 84 10 8281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | LU-A- 80 800 (C. FREUDENBERG) * Seite 2, Zeilen 20-27; Ansprüche 1,7 * & DE - U - 7 809 170 (Kat. D) | 1,5,8 | B 01 D 39/00<br>B 01 D 46/42<br>F 24 C 15/20<br>G 01 N 31/22 |
| | --- | | |
| A | FR-A-2 428 457 (RIENSCH & HELD) * Insgesamt * | 1,8 | |
| | --- | | |
| D,A | DE-C-2 708 435 (RIENSCH & HELD)<br><br>* Insgesamt * | 1,4,5,<br>6,8 | |
| | --- | | |
| A | FR-A-2 120 581 (DOMNICK HUNTER LTD.) * Ansprüche 1,6,7; Seite 1, Zeilen 3-5; Seite 3, Zeilen 7-15 * | 1,8 | |
| | --- | | RECHERCHIERTE SACHGEBIETE (Int. Cl.4) |
| A | EP-A-0 049 346 (AUERGESELLSCHAFT GmbH) * Insgesamt * | 8 | B 01 D<br>F 24 C<br>G 01 N |
| | --- | | |
| P,A | CHEMICAL ABSTRACTS, Band 101, Nr. 2, 9. Juli 1984, Seite 48, Nr. 8358x, Columbus, Ohio, USA; & JP - A - 84 17137 (MITSUI TOATSU CHEMICALS, INC.) 28.01.1984 | 8 | |
| | ----- | | |

Der vorliegende Recherchenbericht wurde für alle Patentansprüche erstellt.

| Recherchenort<br>DEN HAAG | Abschlußdatum der Recherche<br>16-11-1984 | Prüfer<br>HOORNAERT P.G.R.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82